Europäisches Patentamt

European Patent Office

Office européen des brevets

Publication number: **0 297 382**
**A2**

# EUROPEAN PATENT APPLICATION

Application number: 88109801.6

Int. Cl.⁴ **F16K 5/06 , F16K 27/06**

Date of filing: 20.06.88

Priority: 30.06.87 IT 2112987

Date of publication of application:
04.01.89 Bulletin 89/01

Designated Contracting States:
AT BE CH DE FR GB GR LI LU NL

Applicant: **SIRIO S.p.A.**
**Via Settala 6**
**I-20124 Milano(IT)**

Inventor: **Giacomini, Marco**
**28010 Madonna del Sasso**
**Frazione Boleto Novara(IT)**

Representative: **de Dominicis, Silvia Giovanna**
**et al**
**de Dominicis & Partners s.a.s. Via Brera 6**
**I-20121 Milano(IT)**

Improved cock with ball-shaped stopper.

An improved cock with ball-shaped stopper (20), comprising a cock body (21) in which the housing of the stopper (23) has two faces (25, 26) developing in parallel planes opposite each other and in which the stopper (23a), the stopper handle (23c) and the intermediate part (23b) are accommodated in a single rigid piece forming a stopper component (23). The stopper component (23) is provided, on the stopper (23a) and on the part of the intermediate portion adjacent to it, or shank (23b), with a coating a sealant (37, 37a), which forms both the seal toward the outside of the cock (20).

FIG 1

EP 0 297 382 A2

## IMPROVED COCK WITH BALL-SHAPED STOPPER

### Background of the Invention

The present invention refers to an improved cock with ball-shaped stopper.

Cocks with ball-shaped stoppers are presently known in various forms. which are mainly differentiated by the fact that the cock body comes in one or more parts. Although the present invention refers to ball cocks in general. including in this designation as well similar products such a valves. gate valves and the like with ball stoppers. it provides particularly significant advantages in ball cocks having a single body piece. A cock of this type was disclosed by Italian patent No. 1.101.585. The body of this cock features a housing of the ball-shaped stopper. a fluid inlet connection. a fluid outlet connection. plus a hollow neck portion. to permit the insertion of the stopper in its housing, and is also designed for the housing of the control rod or cylinder of the ball with related position-adjustment flexible ring. The latter is housed in a circumferential groove accommodated on the internal surface of the said neck portion. A handle. lever or similar device is connected to the control rod or cylinder of the ball so that it can be manually activated to perform the opening and closing movements of the ball stopper. The housing of the stopper in the cock body is provided with two opposite seats for the housing of two gaskets. between which the ball stopper is clenched. The seal toward the outside is provided with an O-R ring housed in a seat accommodated in the control rod or cylinder of the stopper and operating on the internal surface of the said neck portion. The ball stopper also has a seat for the lodging of a sectional part of the control rod or cylinder. with the said control rod or cylinder also being connectable to the accompanying activation handle or lever by a screw.

Therefore the known ball-stopper cocks require a large number of components. a variety of processing steps and three sealing gaskets. To diminish as much as possible the friction between the stopper and the gaskets housing it. the stopper is manufactured with precision on its outer surface and subsequently coated with chrome. Also, the mounting of such a known cock requires a number of individual assembly phases. which cannot all be conducted automatically.

In embodiments with a multiple part cock body an even higher number of components is necessary, as a result of which the expenditure both for construction and assembly is even greater than that for ball cocks with a body in a single piece.

Although providing an unobjectionable operation and good seals. ball cocks of the known type thus have the disadvantage of a construction requiring a large number of components, numerous manufacturing phases and a complex assembly requiring an equivalent amount of time. This necessarily results in relatively high production costs.

### Summary of the Invention

The present invention provides a ball-shaped cock of the indicated type which maintains a great reliability of operation and sealing power while requiring a drastically reduced number of components which results in a considerable simplification in the production and manufacturing phases and an assembly that may be achieved in extremely brief periods of time and in an automatic manner.

Included within the scope of the present invention is also the object of creating ball cocks which. provide satisfactory operation and sealing performance and can be produced at greatly contained costs.

A further object of the present invention consists of providing a ball cock occupying - with equivalent ball stopper dimensions - a smaller space than the ball cocks of the known type.

The object of the present invention is resolved by a ball cock featuring the particular features pointed out by the characterizing part of claim 1. Additional structural embodiments are disclosed by the features indicated in the characterizing part of the following claims. The ball-shaped cocks according to the invention provide numerous advantages. the salient ones being the following:

a. Having in practice combined in a single piece the stopper control handle or lever, the rod or cylinder and the ball stopper itself. the manufacturing of these parts is considerably simplified, since the said single stopper component can now be simply produced by stamping the metal. plastic material and rubber in a single piece or as a rigid composite medium. The stopper component thus produced in the metallic embodiment can then be lightened at will in such a way as to reduce the weight.

b. The production of the stopper is also simplified. since in the metallic embodiment it is no longer necessary to have a smooth finish applied to an unobjectionable manner to the outer surface of the ball, with subsequent chrome coating.

c. Overall the assembly of the cock is simplified considerably. not only by the drastic reduction of the components, but also by the elimination of all three gaskets previously necessary.

d. The application of the sealant directly to the stopper component of metal or plastic material may advantageously be performed without any problem according to the known coating procedures. The anchoring of the sealing material is satisfactory, both owing to the high qualitative standards of the procedure and also to the pairing of form between coating material and stopper component, since the profile of the parts to be coated is shaped with various projections and indentations.

e. The embodiment of the ball in rubber provides maximal structural simplicity.

f. The seal obtainable with the new stopper component is unobjectionable, with the seal now being produced between the sealing material on the stopper component and meeting points provided in the body of the cock on the one hand and between the sealing material shaped in the form of a toroidal gasket with profiled external shape, e.g. rounded, double-ring, multiple rim, labyrinth type, etc. on the other hand, with this gasket part being engaged directly with the internal surface of the neck portion. This results in a satisfactory seal in the presence of a considerable structural simplification.

g. The stopper component can be advantageously obtained either as a piece stamped in metal or plastic material, or as a composite element with one portion of the stopper made of metal, strongly anchored, advantageously by setting it in, and one portion of rubber, plus a handle or lever of plastic material. In all of the said solutions possible lightenings of the structure as desired are of course possible.

h. The assembly of the structure is reduced in practice to a single phase of insertion of the stopper components in the cock body, pairing the position-adjustment means between the said two parts during the same stage.

i. In the case where the stopper element is built with a position-adjustment groove, these position-adjustment means serve as a simple open and elastic annular element. In contrast, in the case of stopper elements where the upper part is of plastic material, the position-adjustment means are manufactured directly on the stopper component as part emerging therefrom. In any case the position-adjustment means provided are engaged in an annular groove featured, as is known, on the inside of the neck portion.

j. In addition to the advantages concerning the construction and assembly simplification, yet another advantage that may be obtained lies in a considerable lowering of the production costs, as a result of which, indirectly, the cocks according to the invention can now be placed on markets for which the known ball cocks were too expensive.

k. Yet another advantage of the ball cocks according to the invention is seen in the possibility of reducing the space that they occupy. Further details and structural characteristics of the wall cock according to the invention will be given below in the following description with reference to the attached drawings, in which several preferred embodiments of the cocks proposed are illustrated, provided only by way of indication and not limited to these forms.

## BRIEF DESCRIPTION OF THE DRAWINGS

The schematic representations shown in the drawings are as follows:

Fig. 1 is a middle vertical section through a ball stopper cock according to the invention, in open position;

Fig. 2 is a similar middle vertical section through the ball cock of Fig. 1, but with the ball stopper component rotated by 90° as compared to Fig. 1, in the closed position;

Fig. 3 is a top view of the single cock body of Fig. 1 and 2;

Fig. 4 is a middle cross-section of the single cock body according to the IV-IV plane in Fig. 2;

Fig. 5 is a view in perspective of the ball stopper component of the embodiment according to Fig.1 and 2, as a stamped piece;

Fig. 6 is the same stopper component as Fig. 5, equipped with a sealing material coating;

Fig. 7 is a middle longitudinal section through a stopper component according to the invention in a variant of the embodiment, in which the stopper part is made of plastic material to be coated with rubber, or directly of rubber;

Figs. 8, 8a and 8b are three detailed views through the middle section in the neck portion area of the cock body, indicating the various phases of application of a positioning ring;

Fig. 9 is a partial external view on a ball cock according to the invention, illustrating a first exemplified variant of application of the positioning ring;

Fig. 10 is a detail through the middle section in the neck portion area, illustrating an additional variant of the positioning means between the stopper component and the cock body;

Fig.11 is a front view on a stopper component with internal meeting points of opening and closing limit travel;

Figs. 12a and 12b are two partial sections in the XII-XII plane in a cock with rectilinear body and a stopper component according to Fig. 11, Fig. 12a showing the closing position, and Fig. 12b showing the opening position;

Fig. 13 is a middle longitudinal section through a cock with ball-shaped stopper of the known type.

## DESCRIPTION OF THE PREFERRED EMBODIMENTS

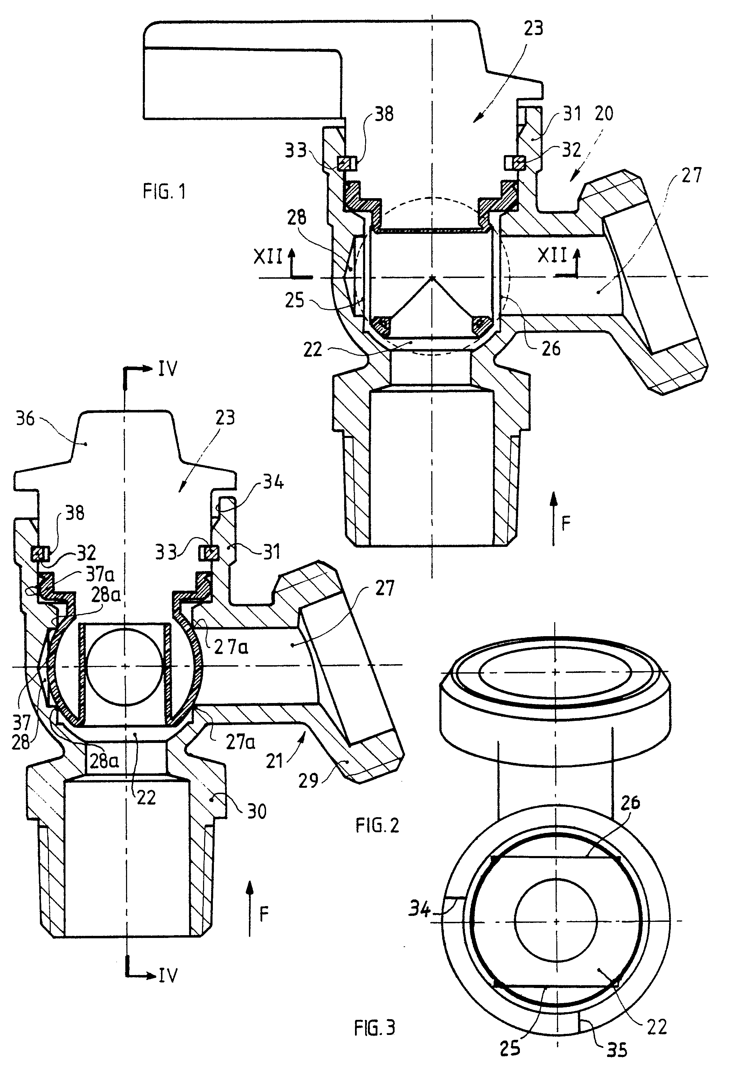

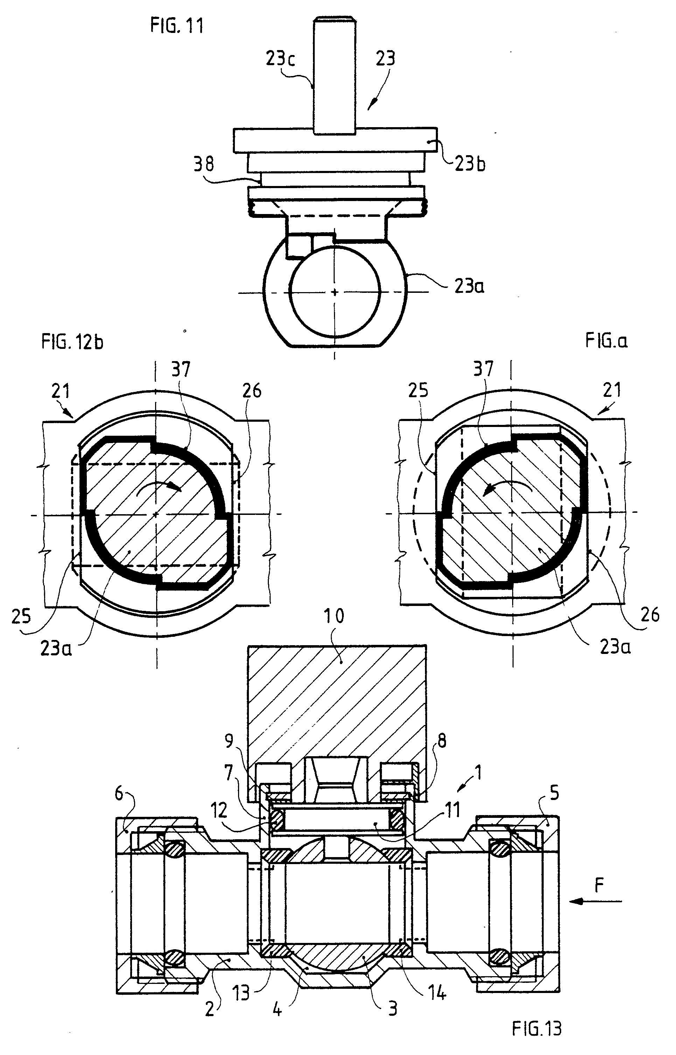

Reference is first made to Fig. 13. illustrating a ball cock of known form. In this Figure 1 indicates the entire cock. which comprises a cock body 2 and a ball stopper 3. In cock body 2 the housing seat of stopper 3 is indicated as 4. while 5 and 6 designate the inlet connection and outlet connection of the fluid. proceeding along arrow F. Seven indicates the neck portion, which accommodates the annular 8 housing a Seeger ring 9 for the position adjustment of stopper 3. The latter is controlled by a handle 10 and an intermediate rod or cylinder 11. This houses an O-R gasket 12, providing the seal toward the outside. The stopper 3 is tightly closed between two gaskets 13 and 14. housed in corresponding seats provided in cock body 2. Up to now the basic structure of the known ball cocks is one with the cock body in a single piece.

Reference is now made to the ball cock embodiments according to the invention. illustrated in Figures 1-12, illustrated for ease of comprehension in different scales in which equivalent parts are indicated with the same reference numbers.

The cock considered as the whole is indicated by 20 (Fig. 1). This assembly includes a cock body 21 (Fig. 2). which has a construction similar to the cocks of the known type. Two flat seats 25 and 26, opposite and parallel. are found in housing 22 of the ball stopper component 23. which will be examined directly in the specification. In the same embodiment of the fluid passage hole 27. or of the seat formation hole 28 in the particular case of rubber cock bodies as illustrated. the formation of sealing edges 27a and 28a are defined. with which the sealing material applied according to the invention cooperates. further as reviewed in the specification below.

Also indicated in the cock body 21 are the fluid outlet connection 29. the fluid inlet connection 30, the neck portion 31, the circumferential groove 32 housing an elastic positioning ring 33, as well as meeting points 34 and 35 determining the end course of movement of the top element of the stopper component 23.

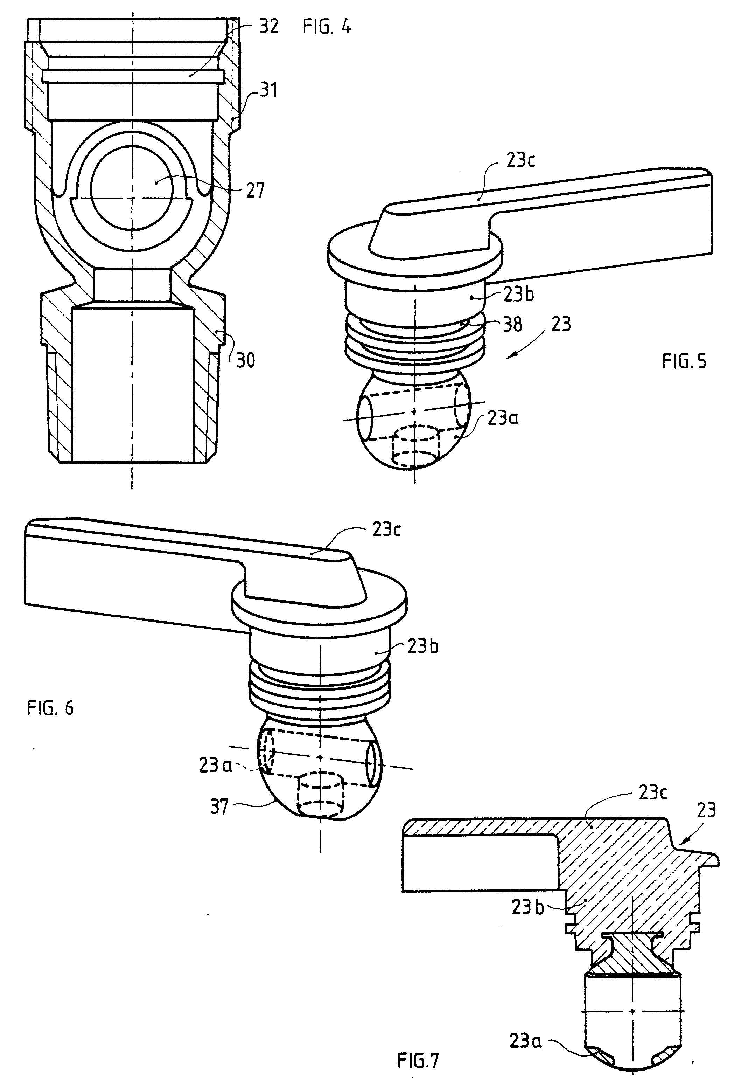

According to the invention the stopper component 23 now comprises in a single piece. e.g., as a stamped element of metal and/or plastic material and/or rubber. the actual ball stopper itself 23a, the rod or cylinder element 23b and the handgrip element 23c, which may obviously be of any conformation. for example a handle. a lever as illustrated. and so on. According to the variant illustrated in Fig. 7 the said stopper component we may likewise comprise a rigid. composite piece made of a ball element 23a of metal or rubber. solidly anchored. e.g. by setting it in, and an additional part of plastic material. including the rod or cylinder portion 23b and the handgrip portion 23c.

According to the invention the three sealing gasket hitherto necessary to guarantee both the seal toward the outside and the support of the ball stopper are replaced by the direct application of the sealing material, for example rubber. to the stopper component 23. and more particularly to the external surface of the ball part 23a and to a portion of the rod or cylinder part 23b. now becoming a shank part adjacent to the ball part 23a. This sealing material coating is indicated by a dark shading on the drawings. This indication is given purely by way of illustration and, for the purpose of easier comprehension. does not take real dimensions into consideration. The entire coating as a whole is indicated by 37a, with it being possible for this to have an essentially circular external contour. as indicated in Fig. 1 and 2. or a double ring contour. as indicated in Fig. 6. or even a multiple rim contour. as indicated in Fig. 11. or also any other suitable profile. The coating or application of the sealing material to the stopper component 23 may be achieved by using any suitable procedure. The solid anchoring of the said sealing layer 37 is guaranteed both by the distinctive features of the methods of application themselves. and by the geometric use of the sealing material on a contoured support. as easily noted from the drawings.

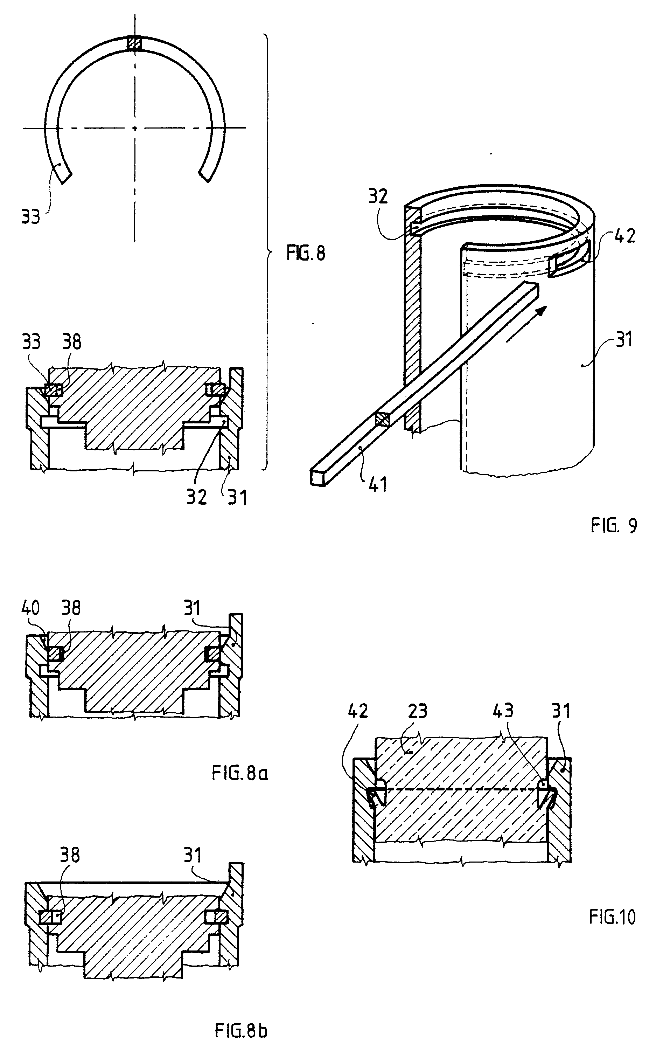

In the case of stopper component 23 in a single piece of rubber or with ball part 23a and/or adjacent annular seal portion of rubber. these parts may be obtained by molding with the traditional methods. The shank part web and/or the handgrip part will be able to contain inserts. not illustrated. As regards the assembly of the two individual parts 21, 23 now forming the ball cock according to the invention. the use of any suitable means is possible. Particularly advantageous are the solutions described below. In reference to Fig. 8-8b a first exemplified embodiment is illustrated, in which in the shank part 23b a groove 38 is provided for the housing of an open ring 33. which can be formed of material having a springy feature in opening. The phases illustrated are self-explanatory. In Fig. 8 the ring 33. illustrated in quadrangular section by a more precise axial positioning of the stopper component 23, is partially inserted in groove 38 and. pushing the stopper element 23 downward. through the inclined plane 40 provided as an annular flare on the neck part 31, brings about the progressive insertion of ring 33 in groove 38 until.

having reached the position shown in Fig. 8b, ring 33 expands by means of its own elasticity and enters groove 32 of neck part 31. In the example in Fig. 9 a tangential insertion of a continuous filament element is proposed as a variant. This element, like ring 33, besides being of metal may consist of a metallic core with a coating of rubber or similar material. In the neck part 31 a tangential slotting 42 is provided formed at the height of the internal groove 32. In this way, following insertion of the stopper component 23, and its positioning in the cock body 21 in such a way that the groove 38 of the stopper component 23 is found in the same plane of the groove 32 of neck part 31, it will be possible to insert the filament 41 through the slotting 42. The filament 41 will then follow coplanar development of the chamber formed by the two grooves 32, 38. After insertion of a portion of filament 41 somewhat higher than the semicircumference of the grooves 32, 38 the filament 41 will be cut on the outside and inserted permanently by means of an unillustrated punch, with said punch and cutting device not being part of the present invention. The portion of filament 41 inserted is adapted in shape to the open ring; therefore in grooves 38 and 32 it guarantees the same reliability of positioning as the ring 33 considered previously.

In the case of a stopper component 23 made completely of plastic material or of composite execution, it is worth mentioning that with a stopper part of metal and a rubber part and handgrip of plastic, it is distinctly possible to eliminate the ring positioning element and to use as a positioning element the same plastic material as the stopper component 23, as illustrated for example in Fig. 10. In this case it will be sufficient to provide protruding ring-shaped sectors 43 as neck sectors and, adjacent to these, a ring-shaped recess 44 to permit them to move slightly inwardly during the insertion of the shutter component 23 in the cock body 21. An additional improvement according to the invention consists of reducing the space occupied by the proposed ball cock. Toward this purpose portions of the same flat internal seats 25, 26 of the same cock body 21 are used as mechanical locks at the meeting points defining the end travel positions of the opening and closing movement of the stopper component 23; cooperating with these portions are meeting point protrusions 45 produced in a single piece on the same stopper component, as shown in Figures 11, 12a and 12b. According to the sealant coating method selected, these meeting point protrusions 45 may or may not be coated with the same material.

Based on what has been described above it can be seen that the ball-shaped stopper cock according to the invention effectively resolves the object set at the base of the invention and the various important advantages mentioned above are achieved, pertaining both to simplification of construction and to speed of assembly, and to a more contained area of space occupied. With the same stopper component it is possible to advantageously use the different types of cock bodies ordinarily supplied, e.g., square-shaped, rectilinear and so on.

All of the individual parts can be replaced by other technically and/or functionally equivalent parts, without going beyond the scope of protection of the present invention. For example, in the stopper component, or in the ball part itself, it is possible to provide a roughened external surface, or small perforations or cavities facilitating and improving the anchoring of the sealant layer or, particularly in the case of large-sized cocks, to replace portion 37a forming a seal toward the outside with a traditional or ring, as well as to give the said portion forming a seal toward the outside a labyrinth contour, or flexible rims and so on, and also to provide other positioning means without similarly abandoning the scope of protection of the present invention. The selection of sealant material is not limited, nor is the form of possible housing seats for the sealant on the ball, nor the various thicknesses of the sealant layer, which may also vary depending on the size of the cock considered.

The guidelines of the present invention can obviously also be applied to all the various components pertaining to taps, pipe fittings, valves and similar items using stoppers or rotating bodies functionally equivalent to the ball stoppers described above. Also falling within the scope of the present invention is the use of the said stoppers or rotatable bodies provided with a sealant coating anchored directly therein, or themselves made of rubber or similar sealant materials, which are controlled indirectly, or do not form a single piece with the related activation or control parts.

All the characteristics disclosed by the description, by the claims and by the drawings are to be considered in connection with the present invention, either individually or in combination with each other, according to the case.

## Claims

1. Improved cock with ball-shaped stopper, consisting of a cock body with a ball stopper housing seat, a flow inlet connection and outlet connection, and a neck portion for the introduction and positioning of the ball stopper, and also comprising a ball stopper part, a handgrip and control part, and an intermediate part located between the said handgrip and said ball stopper, as well as positioning

mecnanisms between the cock body and the various parts associated with the stopper. and means at the meeting points for defining the end travel positions of the closing and opening movements of said stopper. characterized by said ball stopper part (23a). said handgrip and control part (23c) and said intermediate part (23b) being formed in a single rigid piece to provide a stopper component (23). by a layer of sealant material (37. 37a) being anchored directly on said intermediate part (23b) and cooperating directly with the cock body (21) to provide both the seal between the cock body (21) and the ball stopper part (23a) and the seal toward the outside. and by housing seat (22) of the ball stopper (23a) in said cock body having two opposite surfaces (25. 26) developing in parallel planes. in which the sides formed therein by the fluid passage hole (27). or the dead hole (28) accommodating the housing formation in angular cock bodies (21). form the sealant sides cooperating with the sealant coating (37) anchored on the stopper part (23a).

2. Cock according to claim 1, in which the single-piece stopper (23) to which the sealant material is anchored (36. 37a) is made entirely of metal. e.g. aluminum.

3. Cock according to claim 1. in which the single-piece stopper component (23). to which the sealant material (37. 37a) is anchored. is made of plastic material.

4. Cock according to claim 1. in which the stopper component (23) is made of a rigid composite piece in two parts. comprising a stopper part (23a) of metal or plastic to be coated with the outer layer in sealant material (37). or directly as a hollow rubber ball. including an upper part (23b. 23c) consisting of the intermediate shank part (23b) and the handgrip part (23c) of plastic.

5. Cock according to claim 1. in which the stopper component (23) is made entirely of rubber, with it being possible to provide reinforcement inserts.

6. Cock according to claim 1 in which in the intermediate portion (23b) adjacent to the stopper part (23a) the sealant coating (37) has a portion (37a) with a contoured ring- shaped conformation. cooperating with the internal surface of the neck part (21) to form the seal toward the outside.

7. Cock according to claim 1 and 6, in which the contoured portion (37a) of the gasket part forming the seal toward the outside has a double-ring, flexible rim, labyrinth shape, etc.

8. Cock according to claim 1 in which in the shank part (23b) a peripheral groove (38) is provided to house a positioning ring (33), the latter consisting of an opening ring with a springing action on opening and of quadrangular section, and also with the internal upper corner of the neck part (31) of the cock body (21) featuring a flaring part (40) converging toward the inside to permit the automatic positioning of the opening positioning ring (33) first in the groove (38) of the shank part (31) of the stopper component (23) and then in the groove (38) of the neck part (31) of the cock body (21).

9. Cock according to claim 1, in which in the neck part (31) of the cock body (21) a tangential slotting (42) is provided for the insertion of a positioning filament (41) simultaneously in the positioning groove (32) provided in the said neck part (31) and in the positioning groove (32) provided in the said neck part (31) and in the positioning groove (38) provided in the shank part (23b) of the stopper component (23). with the positioning ring being drawn by a continuous filament (41) preventively inserted via a part exceeding the semicircumference of the neck part (31). and subsequently cut and then inserted completely by a punch.

10. Cock according to claim 1 in which the stops determining the position of maximum opening and closing of the stopper component (23) are formed as meeting point protrusions (45) on the stopper part itself [ 23 ) the said protrusions (45) cooperating with internal surfaces of the cock body (21) forming on the flat surfaces of the two seats (25. 26) housing the ball part (23a) of the stopper component (23).

FIG. 1

FIG. 2

FIG. 3

FIG. 4

FIG. 5

FIG. 6

FIG. 7

33

FIG. 8

33  38

32  31

32

42

31

41

FIG. 9

40  38  31

FIG. 8a

42  23  43  31

FIG.10

38  31

FIG.8b

FIG. 11

23c  23

38

23b

23a

FIG. 12b

21  37  26

25

23a

FIG. a

25  37  21

26

23a

10

9  8

7

6  12  1  5

11

2  13  4  3  14

F

FIG. 13